# EUROPEAN PATENT APPLICATION

(11) **EP 2 428 832 A1**
(43) Date of publication of application: **14.03.2012**
(21) Application number: 10772114.4
(22) Date of filing: 28.04.2010
(51) Int. Cl.: G02B 27/01, B60K 35/00

(54) **DISPLAY DEVICE, DISPLAY METHOD AND VEHICLE**

(30) Priority: 08.05.2009 JP 2009113454
(71) Applicant: Kabushiki Kaisha Toshiba, Minato-ku Tokyo 105-8001 (JP)
(72) Inventor: HAGIWARA, Tsuyoshi, Tokyo (JP); NAGAHARA, Osamu, Tokyo (JP); HORIUCHI, Kazuo, Tokyo (JP)
(74) Representative: Fritsche, Daniel
(86) International application number: PCT/JP2010/003035
(87) International publication number: WO 2010/128588

(57) **Abstract**

According to one embodiment, a display apparatus includes an image projection unit, a first emitter and a second emitter. The image projection unit is configured to project a luminous flux including an image toward a viewer. The first emitter is configured to emit a first marker light. The first emitter is set along an advance direction of the luminous flux. The second emitter is configured to emit a second marker light. The second emitter is set at a side nearer to the viewer than the first emitter along the advance direction.

## Description

### FIELD

Embodiments described herein relate generally to a display apparatus, a display method and a vehicle.

### BACKGROUND

As one example of a display apparatus, a HUD (Head-Up Display) is widely used. For example, the HUD is used as the display apparatus for a vehicle or a cockpit of an airplane. As to a display image formed by an image formation apparatus such as a LCD (Liquid Crystal Display) or a CRT (Cathode Ray Tubs), the display image is presented to a viewer operating the vehicle or the airplane by reflected with a front glass thereof. The HUD overlaps the display image (reached to the viewer by reflected with the front glass) onto a forward view (reached to the viewer by passing through the front glass), and presents the display image with the forward image to the viewer. As a result, the viewer can view the display image and the forward view simultaneously. Briefly, the HUD can naturally present an image easy to be viewed.

The HUD projects a luminous flux including an image to be presented. This projection area is often controlled within a specific area. While an eye position of the viewer is within the projection area, the viewer can view the image. Accordingly, when the eye position of the viewer is outside the projection area, the viewer needs to move the eye position or a position of the projection area. In this case, if the viewer cannot recognize the projection area, the viewer cannot adjust the position thereof.

Furthermore, for example, if a combiner (semi-transparent reflector) such as a half-mirror (to effectively reflect a luminous flux emitted from the HUD) is set (disposed) on the front glass, the viewer can estimate a position reflecting the luminous flux (a display position on the HUD) to some extent. However, if the combiner is not set on the front glass, the viewer cannot recognize the position reflecting the luminous flux.

As mentioned-above, as to the conventional HUD, the viewer cannot recognize a projection area of the luminous flux. Accordingly, for example, adjustment of a position of the projection area of the luminous flux is difficult. Furthermore, when the viewer cannot view a display of the HUD, the viewer cannot understand which direction to move the viewer' s head in order to view the display. Briefly, the conventional HDD is hard to be used.

Display of the HUD is often viewed by both eyes of the viewer. However, when the viewer simultaneously views a display image of the HUD while viewing a background distantly located, the viewer views the display image of the HUD as an overlap image thereof, i.e., the viewer cannot easily view the display image. Conversely, when the viewer simply views the display image of the HUD, the viewer recognizes the display image at a specific depth position because of binocular parallax, i.e., the viewer cannot easily recognize the background distantly located. In order to remove view-difficulty caused by such binocular parallax and in order for the viewer to heighten a perceivable depth feeling, a monocular HUD to view a display image by one eye is used. In case of this monocular HUD, a projection area of a luminous flux emitted from the HUD is especially small to project onto one eye of the viewer. Accordingly, as to the monocular HUD, above-mentioned problem when a position of the viewer's eye shifts from the projection area is especially remarkable.

In a specific conventional art, in case of operating a control switch to adjust a position of a display image, a HUD lighting a mark to view an area of the display image is disclosed. In this method, as the mark, an edge part of a display device to display is lightened. In this case, a visual angle to view the mark is equal to a visual angle to view the display area. Accordingly, when the viewer cannot view the display area, the viewer cannot view the mark too. As a result, in this conventional art, estimation of the position of the projection area is also difficult for the viewer.

### SUMMARY

Embodiments provide a display apparatus of HUD type to easily estimate a position of a display viewable area.

According to the aspects of one embodiments, there is provided a display apparatus including an image projection unit, a first emitter and a second emitter. The image projection unit is configured to project a luminous flux including an image toward a viewer. The first emitter is configured to emit a first marker light. The first emitter is set along an advance direction of the luminous flux. The second emitter is configured to emit a second marker light. The second emitter is set at a side nearer to the viewer than the first emitter along the advance direction.

According to embodiments, a display apparatus of HUD type to easily estimate a position of a display viewable area can be provided.

### BRIEF DESCRIPTION OF THE DRAWINGS

Fig.1 is a schematic diagram of a display apparatus according to a first embodiment.

Figs.2A and 2B are schematic diagrams of a first status of the display apparatus according to the first embodiment.

Figs.3A and 3B are schematic diagrams of a second status of the display apparatus according to the first embodiment.

Figs.4A and 4B are schematic diagrams of a third status of the display apparatus according to the first embodiment.

Fig. 5 is a schematic diagram of another display example of the display apparatus according to the first embodiment.

Figs.6A∼6G are schematic diagram of display examples according to modifications of the first embodiment.

Figs.7A∼7C are schematic diagrams of a principal part of the display apparatus according to the first embodiment.

Fig.8 is a schematic diagram of the display apparatus according to a first modification of the first embodiment.

Fig.9 is a schematic diagram of a principal part of the display apparatus according to a second modification of the first embodiment.

Fig.10 is another schematic diagram of the principal part of the display apparatus according to a third modification of the first embodiment.

Fig.11 is a schematic diagram of a display apparatus according to a second embodiment.

Figs.12A and 12B are schematic diagrams of a first status of the display apparatus according to the second embodiment.

Figs.13A and 13B are schematic diagrams of a second status of the display apparatus according to the second embodiment.

Figs.14A and 14B are schematic diagrams of a third status of the display apparatus according to the second embodiment.

Fig.15 is a schematic diagram of the display apparatus according to a modification of the second embodiment.

Fig.16 is a schematic diagram of a principal part of the display apparatus according to the modification of the second embodiment.

Fig.17 is a flow chart of a display method according to a third embodiment.

Fig.18 is a flow chart of a display method according to a fourth embodiment.

### DETAILED DESCRIPTION

### (The first embodiment)

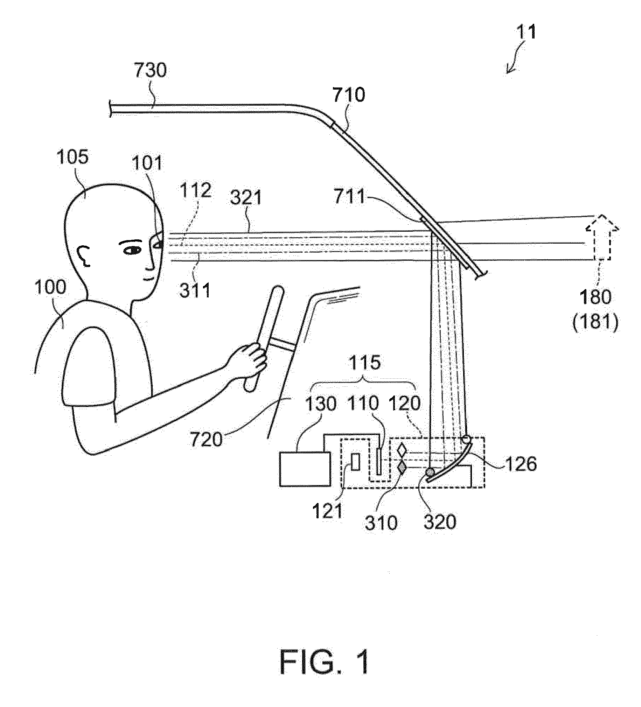

Fig.1 is a schematic diagram showing one example of a component of a display apparatus 11 according to the first embodiment. As shown in Fig.1, the display apparatus 11 includes an image projection unit 115, a first emitter 310, and a second emitter 320.

The image projection unit 115 projects a luminous flux 112 including an image toward a viewer 100. The first emitter 310 is set (disposed) along the luminous flux 112, and emits a first marker light 311. The second emitter 320 is set at a side nearer to the viewer 100 than the first emitter 310 along an advance direction of the luminous flux 112, and emits a second marker light 321. For example, the luminous flux 112 can be refracted by various optical elements. In this case, the second emitter 320 is also set at a side nearer to the viewer 100 than the first emitter 310 along the advance direction of the luminous flux 112. Briefly, from a view position of the viewer 100, an optical path length of the second marker light 321 is shorter than that of the first marker light 311.

The display apparatus 11 can be used for various purposes. Hereinafter, a case that the display apparatus 11 is used as a HUD loaded onto a vehicle is explained. Briefly, the display apparatus 11 is loaded onto a vehicle 730 (mobile).

The vehicle 730 is a mobile such as an automobile, a bicycle, a train or an airplane which the viewer 11 (viewing an image presented by the display apparatus 11) rides/takes. The viewer 11 is a person riding the vehicle 730, for example, an operator (driver) driving the vehicle 730.

The display apparatus 11 is located inside the vehicle 730, for example, the interior of a dash board 720 of the vehicle 730 from a view position of the viewer 100.

The image projection unit 115 projects a luminous flux 112 including an image toward one eye 101 of the viewer 100. However, the image projection unit 115 may project the luminous flux 112 including the image toward both eyes of the viewer 100.

When the image projection unit 115 projects the luminous flux 112 toward the viewer 100, the luminous flux 112 includes a specific divergence angle. Briefly, by restricting the divergence angle of the luminous flux 112 to some extent, the viewer 100 can view the image (presented by the display apparatus 11) in a specific view area.

In this way, by restricting a projection area of the luminous flux 112 to some extent, the luminous flux 112 can lighten. For example, the span of the display apparatus is extended, and the power consumption is reduced.

Furthermore, if the projection area of the luminous flux 112 is designed to restrict as an area of one eye of the viewer 100 in order for the viewer 100 not to view with both eyes, difficulty to view due to binocular parallax can be removed, and depth-feeling perceivable by the viewer 100 can be heightened.

Moreover, an image presented to the viewer 100 by the display apparatus 11 includes a display object 180. The display object 180 is various images related to movement information of the vehicle 730 onto which the display apparatus 11 is loaded. For example, the display object 180 is an arrow representing coarse of the vehicle 730, or display contents such as attention or warning. Furthermore, the display object 180 can include location information such as address of arbitrary place in landscape around the vehicle 730, or arbitrary landscape information such as names of roads or surrounding buildings. Furthermore, the display object 180 can include arbitrary vehicle information such as the present location, a velocity or fuel of the vehicle 730.

For example, the image projection unit 115 includes an image generation unit 130, an image formation unit 110, and a projection unit 120. The image generation unit 130 generates an image signal corresponding to an image including the display object 180, and supplies the image signal to the image formation unit 110.

The image formation unit 110 forms an image on a screen of the image formation unit 110, based on the image signal supplied. As the image formation unit 110, for example, a LCD is used. However, as explained afterwards, arbitrary image formation device except for the LCD can be used as the image formation unit 110.

The projection unit 120 projects the image (formed by the image formation unit 110) onto an eye 101 of the viewer 100. For example, the projection unit 120 includes a light source 121 and a mirror 126. A light emitted from the light source 121 is incident to the image formation unit 110, and modulated to a luminous flux 112, based on the image formed by the image formation unit 110. Then, a shape (figure) of the luminous flux 112 is adjusted by an aperture and so on. The luminous flux 112 is emitted toward, for example, a front glass 710 (wind-shield, transparent plate) of the vehicle 730 via a mirror 126. In this case, a divergence angle (diffusion angle) of the luminous flux 112 is controlled by various optical elements (not shown in Fig.) of the projection unit 120.

Briefly, the luminous flux 112 reflected by the mirror 126 is reflected by a reflector 711 (combiner) exemplarily set at the front glass 710, and projected onto the eye 101 of the viewer 100. The viewer 100 perceives a virtual image 181 of the display object 180 via the reflector 711. The reflector 711 is designed to have both a transparency and a reflectivity. The viewer 100 can simultaneously view a forward background and an image including the display object 180 (included in the luminous flux 112). In this way, the display apparatus 11 is used as the HUD.

Briefly, by reflecting the luminous flux 112 and projecting an image toward the eye 101 of the viewer 100, the image projection unit 115 makes the viewer 100 able to view the image via the front glass 10 of the vehicle 730. In this case, the front glass 710 includes the reflector 711.

Above concrete example is one component of the projection unit 120 and the image formation unit 110. If a component to project the luminous flux 112 including the image is applied, arbitrary component can be used for the projection unit 120 and the image formation unit 110.

Moreover, if the display apparatus 11 is designed for the viewer 100 to view with one eye, a projection area of the luminous flux at the viewer' s position is controlled for the viewer 100 to view with one eye. For example, a space between both eyes of the viewer 100 is averagely 60mm (millimeter). Accordingly, a width of the projection area of the luminous flux 112 along right and left direction on a head 105 of the viewer 100 is controlled to be approximately 60mm, and the luminous flux 112 is projected onto one eye. Moreover, the image is desirably projected onto a prior eye of the viewer 100 because the viewer 100 can easily view the image. As one eye, the prior eye is desirably selected. Furthermore, by controlling optical elements used for the image projection unit 115 with a controller (not shown in Fig.), a projection position and a projection range of the projection area are controlled.

As the first emitter 310 and the second emitter 320, for example, a LED (Light Emitting Diode) can be used. However, the present embodiments is not limited to the LED. As the first emitter 310 and the second emitter 320, arbitrary light emitter to emit a light based on electric energy can be used. For example, various electric lamps, a laser such as a semiconductor laser, or various EL (Electro-Luminescence) elements, can be used.

Furthermore, as the first emitter 310 and the second emitter 320, arbitrary reflector to reflect an incident light can be used. For example, various mirrors or a scatterer can be used.

Furthermore, as the first emitter 310 and the second emitter 320, arbitrary wavelength converter to emit a light having a wavelength different from that of an incident electromagnetic wave can be used. For example, a phosphor to emit a visible light based on an incident ultraviolet ray can be used.

The first emitter 310 is located at a side of the light source 121 of the luminous flux 112 along an advance direction thereof. Briefly, from a viewpoint along an optical path of the luminous flux 112, the second emitter 320 is located at a farer side from the light source 112 than the first emitter 310, i.e. , a side of the viewer 100.

The first emitter 310 and the second emitter 320 are located outside an area through which the luminous flux passes. In this example, the second emitter 320 is located at a position of the mirror 126 and outside an incident area of the luminous flux 112 to the mirror 126. On the other hand, the first emitter 310 is set on various optical elements of the image projection unit 115. However, a place on which the first emitter 310 and the second emitter 320 are set is arbitrary.

Thus, a first marker light 311 emitted from the first emitter 310 and a second marker light 321 emitted from the second emitter 320 (with the luminous flux 112) are projected onto a head 105 of the viewer 100.

Moreover, divergence angles of the first marker light 311 and the second marker light 321 can be widely set to some extent. For example, divergence angles of the first marker light 311 and the second marker light 321 are wider that a divergence angle of the luminous flux 112. Accordingly, even if an eye 101 of the viewer 100 is positioned outside a projection area of the luminous flux 112, i.e., even if the viewer 100 cannot view an image of the luminous flux 112, the viewer 100 can view the first marker light 311 and the second marker light 321. As a result, the viewer 100 can recognize a position of the projection area of the luminous flux 112 , based on the first marker light 311 and the second marker light 321 having different optical path length.

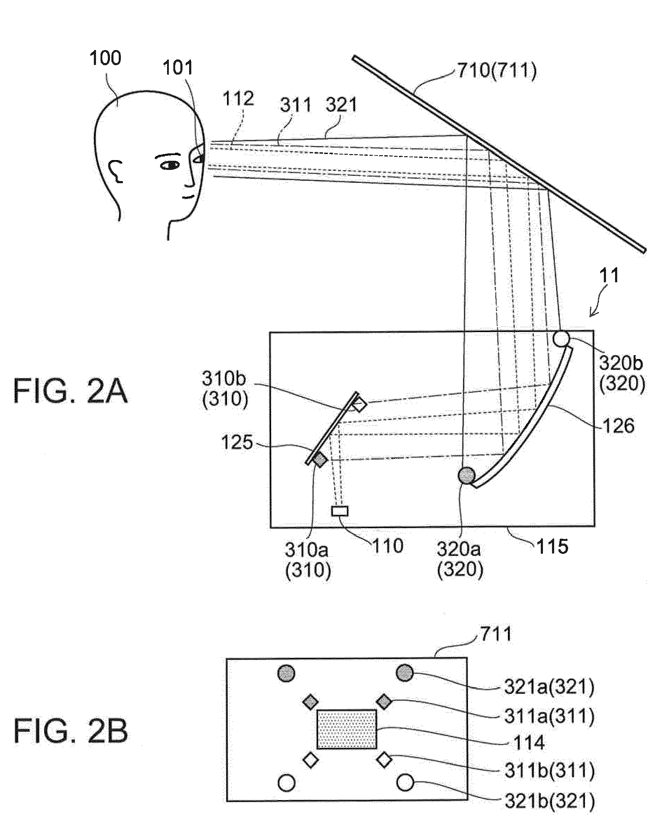

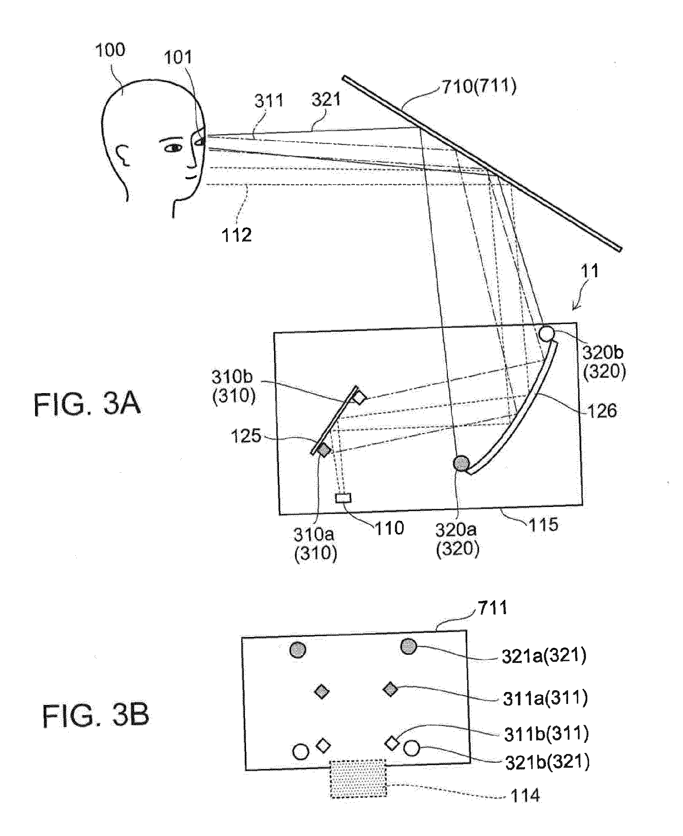

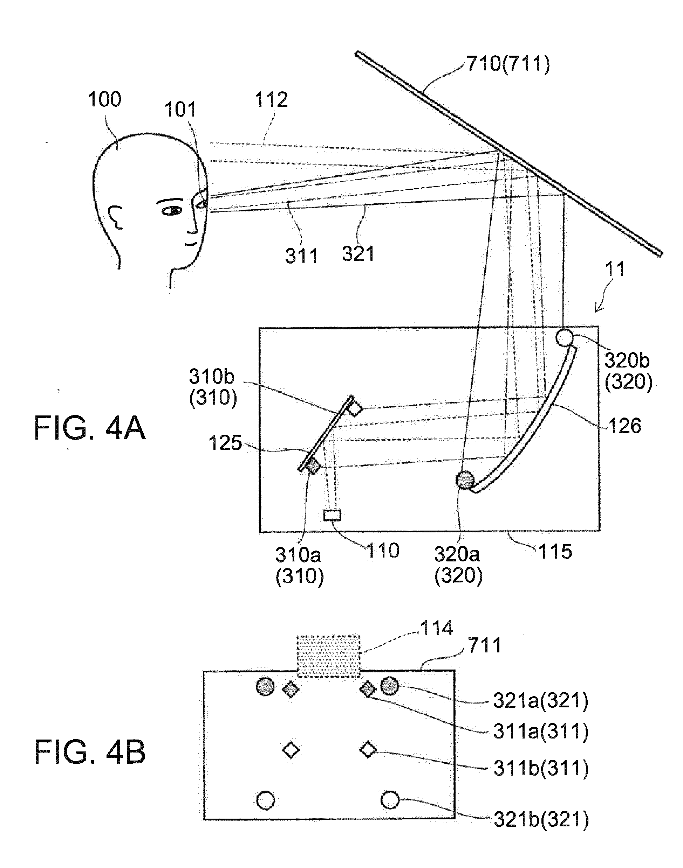

Fig.2∼4 are schematic diagrams showing operation of the display apparatus according to the first embodiment. Briefly, Figs.2∼4 show three relationships between a position of the viewer 100 and a position of the projection area of the luminous flux 112. Fig.2A shows a case that the eye 101 of the viewer 100 is positioned inside the projection area of the luminous flux 112. Fig. 3A shows a case that the eye 101 of the viewer 100 is positioned at an upper side of the projection area of the luminous flux 112. Fig. 4A shows a case that the eye 101 of the viewer 100 is positioned at a lower side of the projection area of the luminous flux 112. Figs.2B, 3B and 4B show the projection area of the luminous flux 112, and positions of the first marker light 311 and the second marker light 321 from a viewpoint of the viewer 100, in case of Figs.2A, 3A and 4A respectively.

As shown in Fig.2A, as to the display apparatus 11 of this example, the second emitter 320 is set on an edge part of a mirror 126. The first emitter 310 is set on an edge part of a mirror 125 at a side nearer to the image formation unit 110 than the mirror 126, as an optical element.

The first emitter 310 includes two lower LEDs 310a set on a lower part of the mirror 125, and two upper LEDs 310b set on an upper part of the mirror 125. Briefly, for example, the first emitter 310 is set on an extension line along a direction toward four peaks of an incident area from a center of the incident area, so as to surround the incident area of the luminous flux 112 on the mirror 125.

The second emitter 320 includes two lower LEDs 320a set on a lower part of the mirror 126, and two upper LEDs 320b set on an upper part of the mirror 126. Briefly, for example, the second emitter 320 is set on an extension line along a direction toward four peaks of an incident area from a center of the incident area, so as to surround the incident area of the luminous flux 112 on the mirror 126.

When an eye 101 of the viewer 100 is positioned inside the projection area of the luminous flux 112, the viewer 100 can view a display presented by the display apparatus 11. Briefly, the viewer 100 can perceive the luminous flux 112, the first marker light 311 and the second marker light 321 projected onto a reflector 711 of a front glass 710.

As shown in Fig.2B, when the eye 101 of the viewer 100 is positioned inside a projection area of the luminous flux 112, the projection area 114 of the luminous flux 112 is located between an upper side projection position 311a and a lower side projection position 311b of the first marker light 311. The upper side projection position 311a and the lower side projection position 311b of the first marker light 311 are located between an upper side projection position 321a and a lower side projection position 321b of the second marker light 321.

As shown in Fig.3A, when an eye 101 of the viewer 100 is positioned at an upper side of the projection area of the luminous flux 112, the viewer 100 cannot view a display presented by the display apparatus 11.

Briefly, as shown in Fig.3B, a projection area 114 of the luminous flux 112 is located at a lower side of the reflector 711, and the viewer 100 cannot recognize a position of the projection area 114 of the luminous flux 112. At this timing, by largely setting divergence angles of the first marker light 311 and the second marker light 321, the viewer 100 can perceive the first marker light 311 and the second marker light 321. In this case, four projection positions (two upper projection positions 311a and two lower projection positions 311b) of the first marker light 311 are located at a lower side of four projection positions (two upper projection positions 321a and two lower projection positions 321b) of the second marker light 321. In this way, a center of projection positions of the first marker light 311 is positioned at a lower side than a center of projection positions of the second marker light 321. Accordingly, the viewer 100 can guess that the projection area 114 of the luminous flux 112 is positioned at a lower side than the projection position of the first marker light 311.

Then, for example, by moving the viewer's head 105 downwardly, the eye 101 of the viewer 100 is positioned inside the projection area 114, and the viewer 100 can view the display. Furthermore, for example, by adjusting an angle of optical elements (such as the mirror 126) included in the image projection unit 115 of the display apparatus 11, the eye 101 of the viewer 100 is positioned inside the projection area 114, and the viewer 100 can view the display.

As shown in Fig.4A, when an eye 101 of the viewer 100 is positioned at a lower side of the projection area of the luminous flux 112, the viewer 100 cannot view a display presented by the display apparatus 11.

Briefly, as shown in Fig.4B, the projection area 114 of the luminous flux 112 is located at an upper side of the reflector 711, and the viewer 100 cannot recognize a position of the projection area 114 of the luminous flux 112. In this case, the viewer 100 can also perceive the first marker light 311 and the second marker light 321. For example, projection positions of the first marker light 311 are located at an upper side of projection positions of the second marker light 321. In this way, a center of projection positions of the first marker light 311 is positioned at an upper side than a center of projection positions of the second marker light 321. Accordingly, the viewer 100 can guess that the projection area 114 of the luminous flux 112 is positioned at an upper side than the projection position of the first marker light 311.

Then, for example, by moving the viewer's head 105 upwardly, the viewer 100 can view the display. Furthermore, for example, by adjusting an angle of optical elements (such as the mirror 126) of the display apparatus 11, the viewer 100 can view the display.

In this way, from a viewpoint of the viewer 100, the first emitter 310 having a far distance (long optical path length) and the second emitter 320 having a near distance (short optical path length) are set. Accordingly, when the projection area 114 of the luminous flux 112 relatively shifts from a position of the eye 101 of the viewer 100, a relative position between the first marker light 311 and the second marker light 321 can be corresponded with the shift direction.

Briefly, when the projection area 114 of the luminous flux 112 is relatively positioned at a lower side of the eye 101 of the viewer 100 (for example, Figs.3A and 3B), a projection position (for example, the center) of the first marker light 311 is located at a lower side of a projection position (for example, the center) of the second marker light 321. On the other hand, when the projection area 114 of the luminous flux 112 is relatively positioned at an upper side of the eye 101 of the viewer 100 (for example, Figs.4A and 4B), a projection position (for example, the center) of the first marker light 311 is located at an upper side of a projection position (for example, the center) of the second marker light 321.

Briefly, from a viewpoint of the viewer 100, the first emitter 310 having a far distance (long optical path length) and the second emitter 320 having a near distance (short optical path length) are set. Accordingly, when the projection area 114 of the luminous flux 112 relatively shifts from a position of the eye 101 of the viewer 100, a shift amount of the position of the first marker light 311 is larger than a shift amount of the position of the second marker light 321. By using this characteristic, a shift direction between the projection area 114 and the position of the eye 101 can be guessed.

In this way, the display apparatus of HUD type for easily estimating a position of a display visible area can be presented. Moreover, in above explanation, a case that a position of the eye 101 of the viewer 100 and the projection area 114 of the luminous flux 114 are shifted along a top and bottom direction is mentioned. However, as to right and left direction, the same operation is performed.

Moreover, the first emitter 310 and the second emitter 320 are set along the luminous flux 112. By this setting, the first marker light 311 and the second marker 321 are related with a position of the projection area of the luminous flux 112. Briefly, as explained with Figs.2∼4, when a position of the projection area 114 of the luminous flux 112 changes from a viewpoint of the viewer 100, positions of the first marker light 311 and the second marker light 321 also change. Then, based on change of positions of the first marker light 311 and the second marker light 321, the position of the projection area 114 of the luminous flux 112 can be estimated.

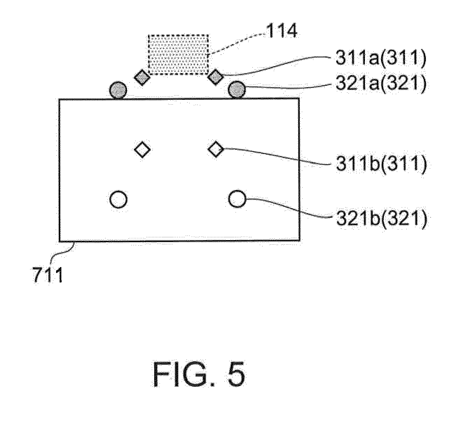

Fig.5 is a schematic diagram of another operation of the display apparatus according to the first embodiment. In Fig. 5, when the eye 101 of the viewer 100 is further positioned at lower side in comparison with Fig. 4, a projection area of the luminous flux 112 and positions of the first marker light 311 and the second marker light 321 are shown from a viewpoint of the viewer 100.

As shown in Fig.5, when the eye 101 of the viewer 100 is further positioned at lower side in comparison with Fig. 4, an upper projection position 311a of the first marker light 311 and an upper projection position 321a of the second marker light 321 are located at an upper side over the area of the reflector 711. In this case, the viewer 100 often cannot recognize the upper projection position 311a of the first marker light 311 and the upper projection position 321a of the second marker light 321. However, as shown in Fig.5, the viewer 100 can view a lower projection position 311b of the first marker light 311 and a lower projection position 321b of the second marker light 321. Accordingly, the viewer 100 can estimate that a position of the projection area 114 of the luminous flux 112 is positioned at the upper side.

In the same way, when the eye 101 of the viewer 100 is further positioned at the upper side in comparison with Fig.3, a position of the projection area 114 of the luminous flux 112 can be estimated.

As mentioned-above, by relatively recognizing a positional relationship between a projection area of the first marker light 311 and a projection area of the second marker light 321, a position of a projection area of the luminous flux 112 can be estimated.

In this case, a shape and a size of projection areas of the first marker light 311 and the second marker light 321 are arbitrarily set. For example, a size of the projection area of the second marker light 321 (such as a size of an area surrounded by upper projection position 321a and lower projection position 321b of the second marker light 321) can be largely set than a size of the projection area of the first marker light 311 (such as a size of an area surrounded by upper projection position 311a and lower projection position 311b of the first marker light 311) . By this setting, a positional relationship between a projection area of the first marker light 311 and a projection area of the second marker light 321 can be relatively recognized.

Furthermore, in above example, the first emitter 310 and the second emitter 320 respectively have four LEDs each of which is located at a peak of a rectangle. However, the present embodiments is not limited to this example.

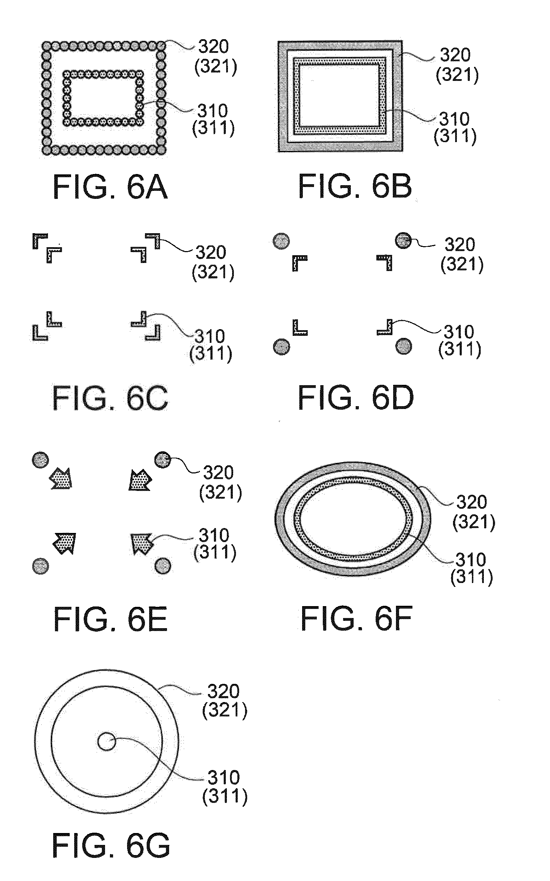

Figs.6A∼6G are schematic diagrams of modifications of the display apparatus according to the first embodiment. Briefly, Figs.6A∼6G show shapes of the first emitter 310 and the second emitter 320 from a view direction in parallel with an advance direction of the luminous flux 112. In other words, Figs.6A∼6G also show shapes of the first marker light 311 and the second marker light 321 from a viewpoint of the viewer 100.

In Fig. 6A, the first emitter 310 and the second emitter 320 respectively have a plurality of circles connected in a frame-shape. For example, by arranging LEDs in a plurality of frame-shapes, this form can be realized.

In Fig.6B, the first emitter 310 and the second emitter 320 respectively have a rectangular frame-shape. For example, by using a frame-shape EL layer or a frame-shape phosphor to be irradiated with ultraviolet rays, or by irradiating a light to a frame-shape scatter layer, this form can be realized.

In Fig. 6C, the first emitter 310 and the second emitter 320 respectively have L-shape corresponding to each peak of a rectangle.

In Fig.6D, the first emitter 310 has L-shape corresponding to each peak of a rectangle, and the second emitter 320 has circle-shape corresponding to each peak of the rectangle. In this way, as to the first emitter 310 and the second emitter 320, a shape of elements composing each emitter may be different. By these different shapes, the first marker light 311 and the second marker light 321 can be easily distinguished. As a result, a position of a projection area of the first marker light 311 and a position of a projection area of the second marker light 321 can be easily recognized.

In Fig.6E, the first emitter 310 has arrow-shape directing to a center of a rectangle. Moreover, the second emitter 320 has circle-shape located at each peak of the rectangle. In this way, by setting a shape of the first emitter 310 (i.e., a shape of a projection area of the first marker light 311) as a direction recognizable-shape (such as an arrow), a center of the projection area of the first marker light 311 can be easily recognized.

As to the frame-shape shown in Figs.6A and 6B, and the L-shape shown in Figs.6C and 6D, a direction thereof can be recognized. However, as to the arrow-shape shown in Fig.6E, the direction can be intuitively recognized. As this shape, for example, a shape having the pointed end (such as a triangle) is used. By using this shape, a position of the projection area of the marker light (For example, a center position) can be recognized.

In this way, a relative relationship between a position of a projection area of the first marker light 311 and a position of a projection area of the second marker light 321 can be easily recognized. Moreover, a direction intuitively recognizable-shape (a shape having the pointed end such as an arrow or a triangle) may be applied to the second emitter 320.

As mentioned-above, the projection area of the marker light has a position recognizable-shape for the projection area of the marker light. Thus, the position of the projection area of the marker light can be further easily recognized. As a result, a position of a display viewable area (an area for the viewer able to view a display of HUD) is further easily estimated for the viewer. As a position of a projection area of the marker light, a center of the projection area can be used.

In Fig. 6F, the first emitter 310 and the second emitter 320 respectively have edge-shape of an ellipse. In this way, shapes of the first emitter 310 and the second emitter 320 are arbitrary.

In Fig.6G, the first emitter 310 is composed by LED, and the second emitter 320 is formed by a diffuse ring (For example, of plastic make). In this case, the second emitter 320 diffuses LED light of the first emitter 310. Accordingly, when the eye 101 of the viewer 100 is positioned outside a projection range of the luminous flux 112, a LED of the first emitter 310 is positioned outside or at edge of a circle-shape of the second emitter 320. By moving the LED of the first emitter 310 to a center of the circle shape of the second emitter 320, the eye 101 of the viewer 100 can be positioned within the projection range of the luminous flux 112.

As to the first marker light 311 and the second marker light 321, in addition to the shape, a color (i.e., wavelength characteristics) may be different. As a result, the first marker light 311 and the second marker light 321 can be easily distinguished, and a position of the projection area of the first marker light 311 and a position of the projection area of the second marker light 321 can be easily recognized.

At least one of the first emitter 310 and the second emitter 320 may constantly emit a light, or mat switch emission and non-emission (including a case that intensity of emission is relatively low) according to necessity.

For example, if a light emitter to emit a light based on an electric energy is used as the first emitter 310 and the second emitter 320, by switching (ON/OFF) an electric current supplied, emission and non-emission can be switched. Furthermore, if a reflector to reflect an incident light is used as the first emitter 310 and the second emitter 320, by switching (ON/OFF) the incident light, emission and non-emission can be switched. Furthermore, if a wavelength converter (For example, phosphor) to emit a light having a wavelength different from an incident electromagnetic wave (For example, ultraviolet rays) is used as the first emitter 310 and the second emitter 320, by switching (ON/OFF) the electromagnetic wave, emission and non-emission can be switched.

As to the switching emission/non-emission, for example, by setting a switch, the viewer 100 can operate. As a result, only when the viewer 100 adjust or confirm a position of the projection area, by setting the first emitter 310 and the second emitter 320 to an emission status, the viewer 100 can view above-mentioned marker light. In this way, by operating based on the viewer's request, the convenient display apparatus can be presented.

Furthermore, the switching emission/non-emission may be connected with various switches of a vehicle where the viewer 100 rides. For example, the first emitter 310 and the second emitter 320 may start emission at the same time when an engine of the vehicle starts, and after a predetermined time has passed, they may stop emission.

As to the switching emission/non-emission, a position of a head 105 of the viewer 100 is detected. When the position and a position of the projection area of the luminous flux 112 have a predetermined relationship, the first emitter 310 and the second emitter 320 may start emission. When these positions have another relationship, the first emitter 310 and the second emitter 320 may stop emission.

For example, an image of the head 105 of the viewer 100 is captured, and a position of the eye 101 of the viewer 100 is estimated based on the image. On the other hand, a position of the projection area of the luminous flux 112 is estimated from the image. When the eye 101 of the viewer 100 is positioned outside the projection area of the luminous flux 112, above-mentioned emission is started. When the eye 101 of the viewer 100 is positioned within the projection area of the luminous flux 112, the emission is stopped. As a result, the viewer 100 recognizes the first marker light 311 and the second marker light 321 at necessary timing, and the viewer 100 cannot view them at unnecessary timing. Accordingly, the viewer 100 is not prevented from viewing an image included in the luminous flux 112, and the image easy to be viewed is presented.

In this way, emission and non-emission are desired to be switched. Moreover, as mentioned-above, the emission and non-emission correspond to cases of bright light and dark light respectively. In condition of non-emission, relative dark light may be emitted.

Furthermore, when a position (of the eye 101) of the viewer 100 is outside the projection area of the luminous flux 112, the first marker light 311 and the second marker light 321 are projected toward the viewer 100. When a position (of the eye 101) of the viewer 100 is inside the projection area of the luminous flux 112, the first marker light 311 and the second marker light 321 are not projected toward the viewer 100 (or brightness of the light is darkened). These two operations are desired to be automatically switched.

Briefly, in case that the eye 101 of the viewer 100 is inside the projection area 114 of the luminous flux 112, in comparison with case that the eye 101 outside the projection area 114, intensity of a marker light (the first marker light 311 and the second marker light 321) incident to the eye 101 can be lowered. The intensity of the marker light reached inside the projection area 114 of the luminous flux 112 is lower than the intensity of the marker light reached outside the projection area 114. Accordingly, if unnecessary, the viewer 100 does not view the marker light, and is not prevented from viewing the image displayed. If necessary, the viewer 100 can estimate an image recognizable-area by viewing the marker light, and the display apparatus can be easily used.

Furthermore, for example, as to an intensity of at least one of the first marker light 311 and the second marker light 321, it can be designed so as to heighten immediately after starting operation of the display apparatus and lower after passing a predetermined time therefrom.

Furthermore, as to the intensity of at least one of the first marker light 311 and the second marker light 321, for example, it may be related with operation such as engine-start or door-shut/down of the vehicle 730 to which the display apparatus is loaded. Briefly, the intensity of the marker light can be designed so as to heighten immediately after a timing of engine-start or door-shut/down of the vehicle 730, and lower after passing a predetermined period from the timing.

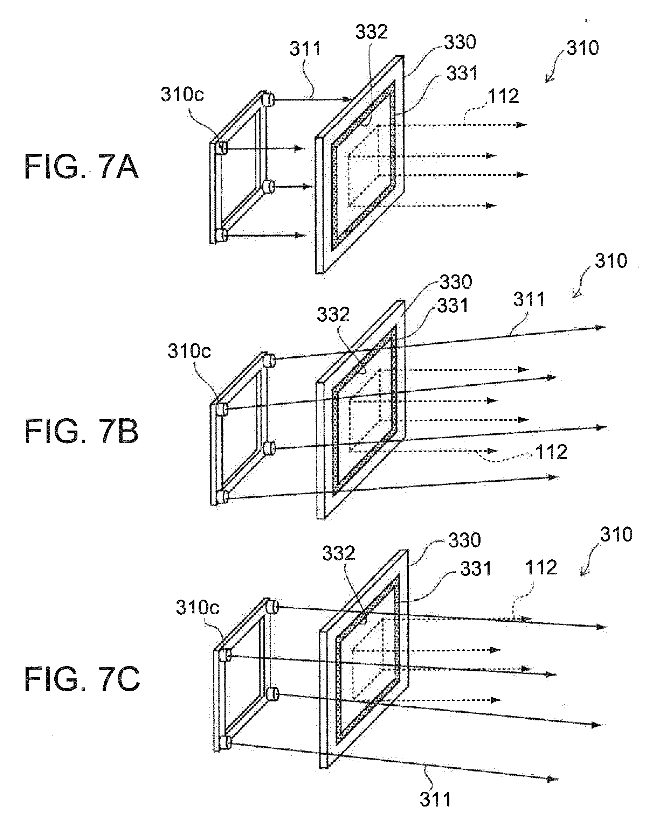

Figs.7A∼7C are schematic diagrams of a principal part of the display apparatus according to the first embodiment. Briefly, Figs.7A∼7C show examples of component and operation of the first emitter 310. As shown in Fig.7A, the first emitter 310 includes a light emitter 310c and a shade 331. The shade 331 shades the first marker light 311 emitted from the light emitter 310c by a specific angle.

For example, LED is used for the light emitter 310c. In the present embodiments, the light emitter 310c is set on a corner part of a frame-shape jig.

As to the light emitter 310c, the shade 331 is set at a side along advance direction of the first marker light 311. In the present embodiment, the shade 331 to shade the first marker light 331, formed by a metallic film on a transparent substrate, is set. The luminous flux 112 can pass through an opening 332 inside the shade 331. However, the shade 331 is arbitrarily composed. For example, a frame-shape metallic plate may be used as the shade 331.

For example, a positional relationship between the light emitter 310c and the shade 331 is set as follows. When the viewer 100 can view an image of the luminous flux 112 by positioning the eye 101 inside the projection area 114 of the luminous flux 112, the first marker light 311 is shaded by the shade 331. Then, when the eye 101 of the viewer 100 is positioned outside the projection area 114, the shade 331 is designed so that the first marker light 311 is projected toward the viewer 100 by passing through parts except for the shade 331. In this way, a shape, width and position of the shade 331 are set.

Briefly, as shown in Fig.7A, for example, in the first marker light 311, a light approximately in parallel with an axis of the luminous flux 112 is shaded by the shade 331.

Then, as shown in Fig.7B, for example in the first marker light 311, a light advancing along an oblique upper direction from the axis of the luminous flux 112 is projected toward the viewer 100 by passing through parts except for the shade 331.

In the same way, as shown in Fig.7C, for example in the first marker light 311, a light obliquely advancing downwardly from the axis of the luminous flux 112 is projected toward the viewer 100 by passing through parts except for the shade 331.

As a result, when the eye 101 of the viewer 100 is positioned inside the projection area 114 of the luminous flux 112, the first marker light 311 is shaded by the shade 331, and the viewer 100 cannot view the first marker light 311. When the eye 101 of the viewer 100 is positioned outside the projection area 114, the first marker light 311 is projected toward the viewer 100, and the viewer 100 can estimate a position of the projection area 114 of the luminous flux 112.

Moreover, in above explanation, component of the first emitter 310 is described. However, this component is applied to the second emitter 320. Briefly, the second emitter 320 includes a light emitter and a shade to shade the second marker light 321 emitted from the light emitter by a specific angle.

A positional relationship between the light emitter and the shade is set as follows. When the viewer 100 can view an image of the luminous flux 112 by positioning the eye 101 inside the projection area 114 of the luminous flux 112, the second marker light 321 is shaded by the shade. When the eye 101 of the viewer 100 is positioned outside the projection area 114, the shade is designed so that the second marker light 321 is projected toward the viewer 100 by passing through parts except for the shade.

Moreover, at least one of the first emitter 310 and the second emitter 320 may have directivity so that an intensity of the marker light is high at a specific angle and low at another angle. For example, this directivity can be realized by designing various lenses. In this case, the same effect as above-mentioned shade is acquired.

In this way, an intensity of the marker light reaching inside the projection area 114 of the luminous flux 112 is lowered than an intensity of the marker light reaching outside the projection area 114. Accordingly, in case that the eye 101 of the viewer 100 is positioned inside the projection area 114 of the luminous flux 112, an intensity of the marker light incident to the eye 101 can be relatively lowered than case that the eye 101 is positioned outside the projection area 114.

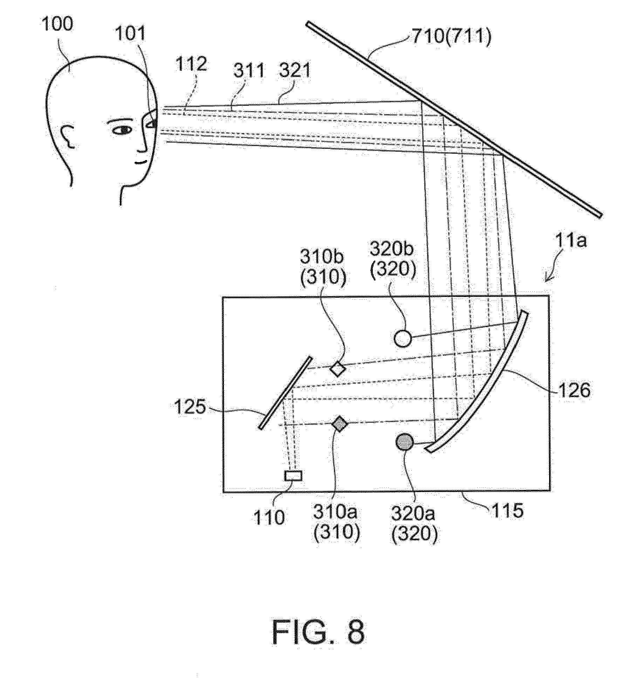

Fig.8 is a schematic diagram of a display apparatus according to a first modification of the first embodiment. As shown in Fig. 8, as to the display apparatus 11a of the first modification, the first emitter 310 and the second emitter 320 are set between two mirrors 125 and 126. In this way, the first emitter 310 and the second emitter 320 are arbitrarily set.

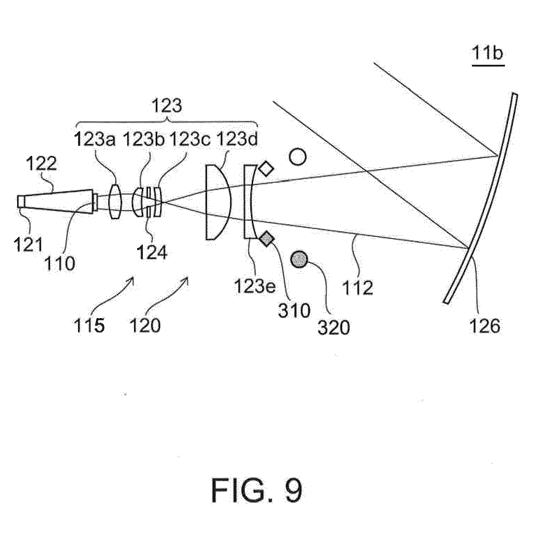

Fig.9 is a schematic diagram of a part of component of a display apparatus according to a second modification of the first embodiment. For example, as shown in Fig.9, as to the image projection unit 115 of the display apparatus 11b of the second modification, a light guide 122 is set between the light source 121 and the image formation unit 110, and a light from the light source 121 is guided into the image formation unit 110. At a light-emission side of the image formation unit 110, a relay lens 123, a concave lens 123e and a mirror 126, are set in order thereof. The relay lens 123 includes a first lens 123a, a second lens 123b, a third lens 123c and a fourth lens 123d, and an aperture 124 is set between the second lens 123b and the third lens 123c. In this modification, the light source 121, the light guide 122, the relay lens 123, the concave lens 123e and the mirror 126, are included in the projection unit 120.

A light emitted from the light source 121 is transformed to a luminous flux 112 including an image by the image formation unit 110. The luminous flux 112 is projected onto the viewer 100 via the relay lens 123, the aperture 124, the concave lens 123e and the mirror 126.

In this modification, the first emitter 310 and the second emitter 320 are set between the concave lens 123e and the mirror 126. However, the first embodiments is not limited to this component, and the first emitter 310 and the second emitter 320 are arbitrarily set. For example, by setting the first emitter 310 between the concave lens 123e and the mirror 126, the second emitter 320 may be set at a position of the mirror 126 or at a side nearer to the viewer 100 than the mirror 126 (based on an advance direction of the luminous flux 112). Furthermore, for example, the first emitter 310 may be set at an arbitrary position of a side nearer to the light source 121 than the concave lens 123e. Furthermore, both the first emitter 310 and the second emitter 320 may be set at a side nearer to the viewer 100 than the mirror 126.

Furthermore, the first emitter 310 and the second emitter 320 may be set at a side nearer to the viewer 100 than the mirror 126 (based on an advance direction of the luminous flux 112). In this case, for example, the first emitter 310 and the second emitter 320 are not located in a body of the image projection unit 115. Briefly, they may be set as another body different from the image projection unit 115.

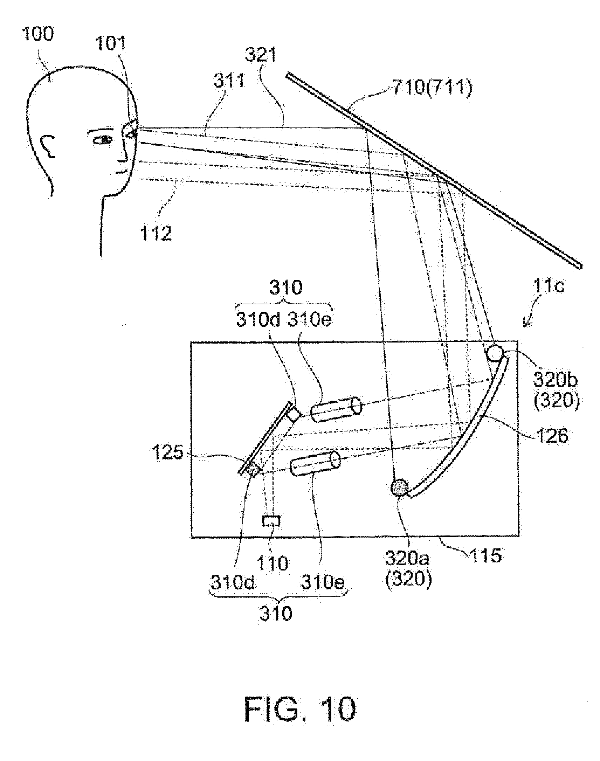

Fig.10 is another schematic diagram of a part of component of a display apparatus according to a third modification of the first embodiment. As shown in Fig.10, as to the display apparatus 11c of the third modification, the first emitter 310 includes a light emitter 310d and a divergence angle control unit 310d to control a divergence angle of a light emitted from the light emitter 310d. As the divergence angle control unit 310e, for example, a cylindrical body having a light absorption layer as an inner surface, or a so-called collimator can be used.

As a result, a divergence angle of light emitted from the light emitter 310d can be narrowed. When the luminous flux 112 is projected onto one eye of the viewer 100, the first marker light 311 may be projected onto the one eye. As a result, for example, the viewer 100 can view an image presented by the luminous flux 112 and the first marker light 311 by the one eye, and the image presented by the luminous flux 112 is easily viewed by the viewer 100.

Moreover, in above explanation, the first emitter 310 is described. In the same way, the second emitter 320 may include a light emitter and a divergence angle control unit to control a divergence angle of a light emitted from the light emitter. As a result, a divergence angle of light emitted from the light emitter can be narrowed. When the luminous flux 112 is projected onto one eye, the second marker light 321 may be projected onto the one eye. As a result, for example, the viewer 100 can view an image presented by the luminous flux 112 and the second marker light 321 by the one eye, and the image presented by the luminous flux 112 is easily viewed.

However, the first embodiment is not limited to above component. For example, when the luminous flux 112 is projected onto one eye, a projection area of at least one of the first marker light 311 and the second marker light 321 may be projected onto a range of one eye or a range of both eyes, i.e., an arbitrary range thereof.

In the display apparatus of the first embodiment, the viewer 100 views a position of the second marker light 321 (emitted from the second emitter 320) reflected by the front glass (including a reflector 711) . Accordingly, the viewer 100 roughly recognizes a reflection position of the luminous flux 112 by the front glass 710, i.e., a display area on HUD.

Furthermore, the first emitter 310 is set at a side nearer to the light source 121 than the second emitter 320. The viewer 100 relatively recognizes a position relationship between a position of a virtual image of the first marker light 311 (emitted from the first emitter 310) and a position of a virtual image of the second marker light 321 (emitted from the second emitter 320) . Accordingly, even if the eye 101 of the viewer 100 is located at a position unable to view a display area of HUD, the viewer 100 can estimate the display area of HUD (a position of the projection area 114 of the luminous flux 112).

As a result, a position of the display area of HUD (the position of the projection area of the luminous flux 112) can be adjusted. Furthermore, by positioning the eye 105 of the viewer 100 into the projection area 114 of the luminous flux 112 while moving the head 105, the viewer 100 can view the display area of HUD.

Then, as to a brightness of at least one of the first marker light 311 and the second marker light 321, for example, a function to change the brightness by an arbitrary switch is equipped. Accordingly, if unnecessary, the first marker light 311 and the second marker light 321 are disappeared, and a presented image and an external background image are easy to be recognized. As a result, the viewer 100 can easily estimate a position of the display visible area, and the display apparatus of HUD type easy to be used can be presented.

### (The second embodiment)

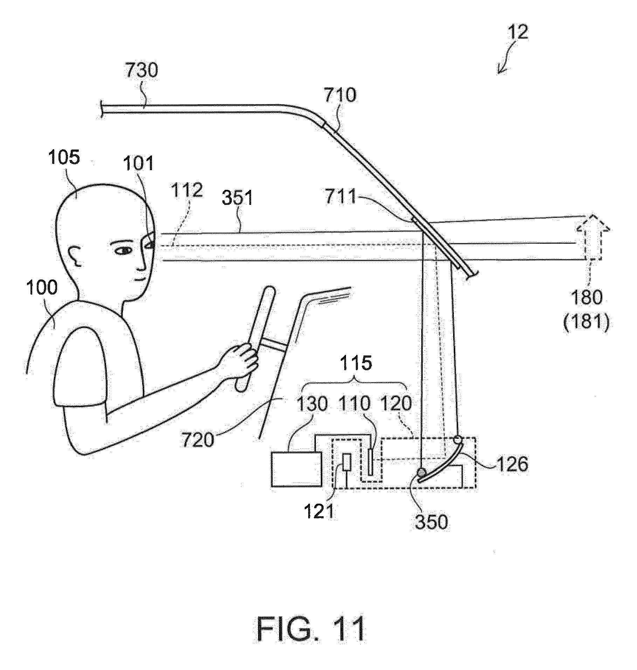

Fig.11 is a schematic diagram of a component of a display apparatus according to a second embodiment. As shown in Fit.11, the display apparatus 12 of the second embodiments includes an image projection unit 115 and an emitter 350. The image projection unit 115 is same as that in the first embodiment, and its explanation is omitted.

The emitter 350 is set along the luminous flux 112 projected from the image projection unit 115 to the viewer 100, and emits a marker light 351. The marker light 351 has a divergence angle wider than a divergence angle of the luminous flux 112.

In the same way as the first embodiment, the emitter 350 includes at least one of a light emitter to emit a light based on an electric energy, a reflector to reflect an incident light, and wavelength converter to emit a light having a wavelength different from an incident electromagnetic wave. For example, as the emitter 350, LED to emit a light (a marker light 351) with an angle wider than an angle of the luminous flux 112.

As a result, even if the eye 101 of the viewer 100 is outside a projection area of the luminous flux 112, the marker light 351 emitted from the emitter 350 can reach the eye 101. Briefly, even if the viewer 100 cannot view the display area of HUD, the viewer 100 can view the marker light 351.

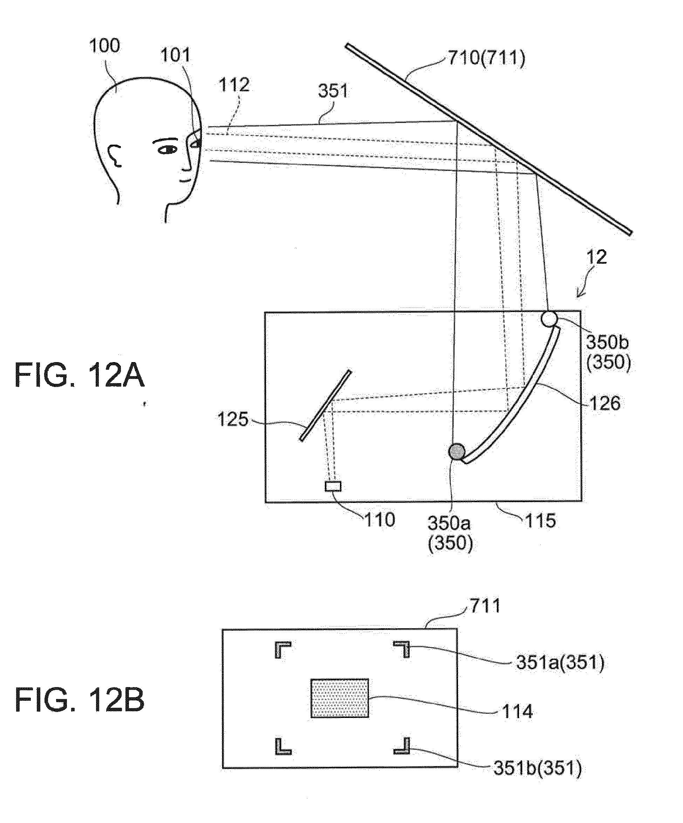

Figs.12-14 are schematic diagrams showing operation of the display apparatus according to the second embodiment. Briefly, Figs. 12∼14 show three relationships between a position of the viewer 100 and a position of the projection area of the luminous flux 112.

As shown in Fig.12A, in the display apparatus 12 of the second embodiment, the emitter 350 is set on an edge part of a mirror 126. Briefly, the emitter 350 includes two lower LEDs 350a set on a lower part of the mirror 126 and two upper LEDs 350b set on an upper part of the mirror 126. Briefly, the emitter 350 is set on an extension line along a direction from a center to four peaks of an incident area of the luminous flux 112 on the mirror 126, so as to surround the incident area.

When the eye 101 of the viewer 100 is positioned inside the projection area of the luminous flux 112, the viewer 100 can view a display presented by the display apparatus 11. Briefly, for example, the viewer 100 can perceive the luminous flux 112 and the marker light 351 projected onto a reflector 711 of the front glass 710.

In this case, as shown in Fig.12B, the projection area 114 of the luminous flux 112 is located between the upper projection position 351a and the lower projection position 351b of the marker light 351.

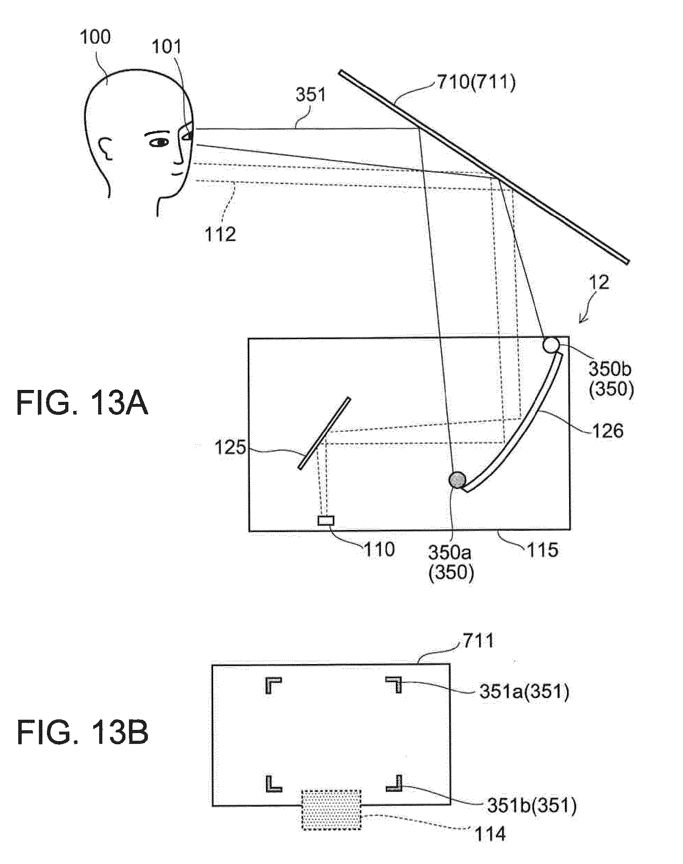

As shown in Fig.13A, when the eye 101 of the viewer 100 is positioned at an upper side of the projection area of the luminous flux 112, the projection area 114 of the luminous flux 112 is located at a lower side of the reflector 711 as shown in Fig.13B. The viewer 100 cannot recognize a position of the projection area 114 of the luminous flux 112.

In this case, a divergence angle of the marker light 351 is larger than a divergence angle of the luminous flux 112. Accordingly, the viewer 100 can perceive the marker light 351. By recognizing a projection position of the marker light 351, the viewer 100 can roughly estimate a reflection position of the luminous flux 112 on the front glass. Based on an estimation result of the reflection position of the luminous flux 112, by slightly moving the head 105 downwardly, the viewer 100 can easily view the luminous flux 112. As a result, the viewer 100 can recognize the projection area 114 of the luminous flux 112.

Then, for example, by moving the head 105 downwardly, the viewer 100 can view a display of HUD. Furthermore, for example, by adjusting an angle of optical elements included in the display apparatus 11, the viewer 100 can view the display.

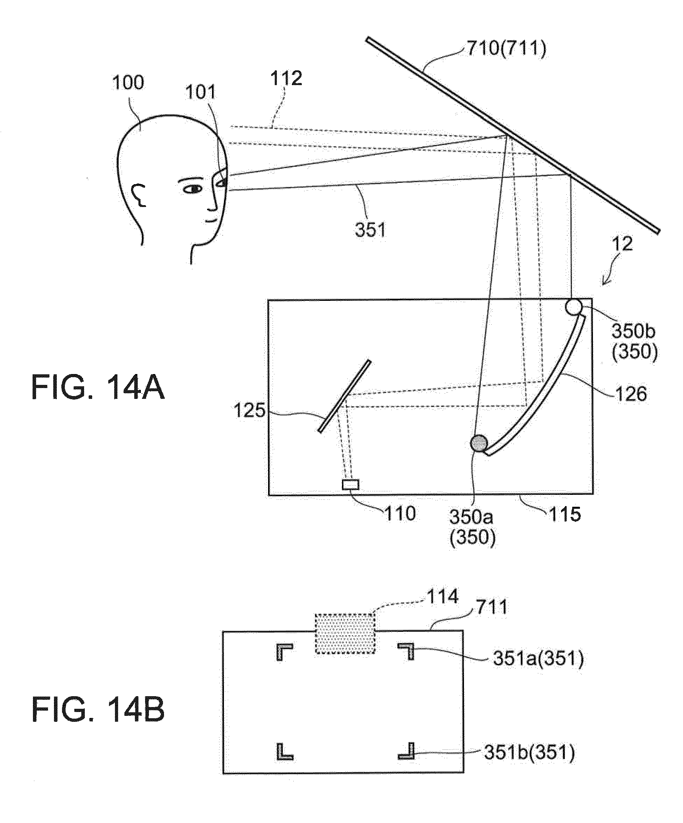

As shown in Fig.14A, when the eye 101 of the viewer 100 is positioned at a lower side of the projection area of the luminous flux 112, the projection area 114 of the luminous flux 112 is located at an upper side of the reflector 711 as shown in Fig.14B. The viewer 100 cannot recognize a position of the projection area 114 of the luminous flux 112.

In this case, a divergence angle of the marker light 351 is larger than a divergence angle of the luminous flux 112. Accordingly, the viewer 100 can perceive the marker light 351. By recognizing a projection position of the marker light 351, the viewer 100 can roughly estimate a reflection position of the luminous flux 112 on the front glass. Based on an estimation result of the reflection position of the luminous flux 112, by slightly moving the head 105 upwardly, the viewer 100 can easily view the luminous flux 112. As a result, the viewer 100 can recognize the projection area 114 of the luminous flux 112.

Then, for example, by moving the head 105 upwardly, the viewer 100 can view a display of HUD. Furthermore, for example, by adjusting an angle of optical elements included in the display apparatus 11, the viewer 100 can view the display.

In this way, the emitter 350 to emit the marker light 351 having a divergence angle larger than that of the luminous flux 112 is set. By using the marker light 351 as a clue to search the projection area 114 of the luminous flux 112, the viewer 100 can estimate a position of the projection area 114 of the luminous flux 112.

As mentioned-above, the display apparatus 12 of HUD type to estimate a position of the display viewable area can be presented.

Moreover, in above explanation, a case that a position of the eye 101 of the viewer 100 and a position of the projection area 114 of the luminous flux 112 are shifted along a top and bottom direction is explained. However, as to a right and left direction, the same operation is performed.

Moreover, in the second embodiment, the emitter 350 is set on the mirror 126. However, the emitter 350 can be arbitrarily set. For example, by building in a body of the image projection unit 115, the emitter 350 may be set adjacent to various optical elements included in the image projection unit 115. Furthermore, by setting at a side nearer to the viewer 100 than the image projection unit 115, the emitter 350 may be set as another body different from the image projection unit 115.

Briefly, by setting along the luminous flux 112 including the image, the emitter 350 can be set at an arbitrary position not to block the advance of the luminous flux 112. Furthermore, for example, the emitter 350 may have a component as one body with the projection unit 120 or the image forming unit 110 included in the image projection unit 115.

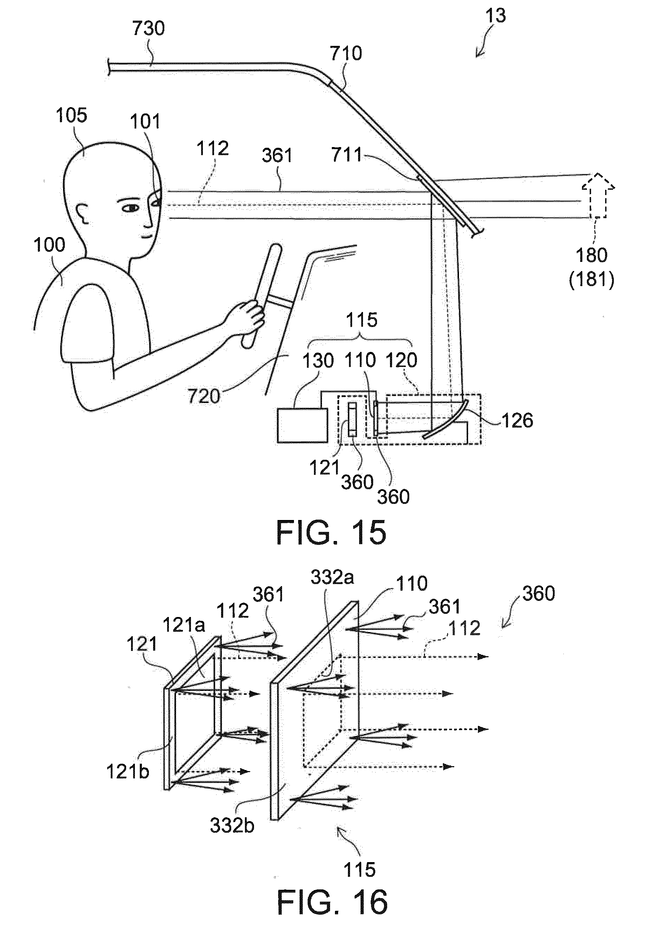

Fig.15 is a schematic diagram of a component of a display apparatus according to a modification of the second embodiment. As shown in Fig.15, as to the display apparatus 13 of the modification, an image projection unit 115 and an emitter 360 are set. In this case, a part of a light source 120 included in the image projection unit 115 and a part of the image forming unit 110 are used as the emitter 360.

Fig.16 is a schematic diagram of a principal part of a display apparatus according to the modification of the second embodiment. As shown in Fig.16, as to the display apparatus 13 of the modification, the light source 121 of the projection unit 120 of the image projection unit 115 includes an inside part 121a and an outer edge part 121b. The inside part 121a is a part to project a luminous flux 1123 (including an image) toward the viewer 100. The outer edge part 121b is a part for a marker light 361.

A divergence angle of the outer edge part 121b is larger than a divergence angle of the inside part 121a. In order to realize this feature, various optical sheets having different optical characteristics for the inside part 121a and the outer edge part 121b may be arranged. Furthermore, light emitters having different characteristic for the inside part 121a and the outer edge part 121b may be set. Briefly, the realization method is arbitrary.

In this way, as to the display apparatus 13, by changing light emission characteristics of the light source 121 for the inside part 121a and the outer edge part 121b, a part of the light source 121 of the projection unit 120 included in the image projection unit 115 is used as the emitter 360.

Furthermore, in this modification, as to the image forming unit 110 (for example, composed by LCD) located at a light emission side of the light source 121, a center part 332a and a circumference part 332b are set. The center part 332a is a part to pass a luminous flux emitted from the inside part 121a of the light source 121 and form the luminous flux 112 including an image. The circumference part 332b is a part to pass a light (marker light 361) emitted from the outer edge part 121b of the light source 121. In this case, a display area (active area) of the image forming unit 110 is set to include the center part 332a and the circumference part 332b of the image forming unit 110 . As a result, at the center part 332a of the image forming unit 110, an image is generated in correspondence with the display area. At the circumference part 332b, the marker light 361 having arbitrary shape shown in Fig.6, i.e., arbitrary pattern, is generated.

As mentioned-above, as to the display apparatus 13, a shape of the marker 361 is controlled by a part of the image forming unit 110 included in the image projection unit 115. In this moaning, the circumference part 332b of the image forming unit 110 is regarded as a part of the emitter 360.

Moreover, in the display apparatuses 11, 11A∼11C, 12 and 13 of the first and second embodiments, as the image forming unit 110, except for LCD, various optical switches such as DMD (Digital Micromirror Device) and MEMS (Micro-electro-mechanical System) are used. Furthermore, as the image forming unit 110, a laser projector or a LED projector can be used. In this case, the image is formed by a light from a laser beam or a LED.

Furthermore, as the light source 121, various objects such as the LED, a high-pressure mercury lamp, a halogen lump or a laser, can be used.

Furthermore, the relay lens 123 and the concave lens 123e of the projection unit 120 can have arbitrary component. Furthermore, as the mirror 126, for example, a concave mirror having a power can be used. In this case, the image can be enlarged or reduced with a predetermined ratio. Moreover, as to the projection unit 120, for example, by setting a Fresnel lens of aspheric surface, it can be designed so as to control a shape (such as a sectional form) of the luminous flux 112 to match with a shape of the front glass 710.

As to the display apparatuses 12 and 13 of the second embodiment, an intensity of the marker light reaching inside the projection area 114 of the luminous flux 112 is lower than an intensity of the marker light reaching outside the projection area 114. In case that the eye 101 of the viewer 100 is positioned inside the projection area 114 of the luminous flux 112, in comparison with case that the eye 101 is positioned outside the projection area 114, an intensity of the marker light incident to the eye 101 can be relatively lowered. As a result, if unnecessary, the viewer 100 cannot view the marker light, and is not prevented from viewing the image displayed. If necessary, by viewing the marker light, the viewer 100 can estimate an area able to recognize the image, and the display apparatus is further easy to be used by the viewer 100.

Moreover, in above explanation, an example that the display apparatus is loaded onto a moveable body (such as the vehicle 730) as HUD is explained. However, the first and second embodiments are not limited to this example, and applied to arbitrary display apparatus. For example, in addition to a display apparatus for amusement (such as a game) to present an image having a depth feeling heightened by viewing with one eye, the first and second embodiments can be applied to various display apparatus used for medical treatment or various designs.

### (The third embodiment)

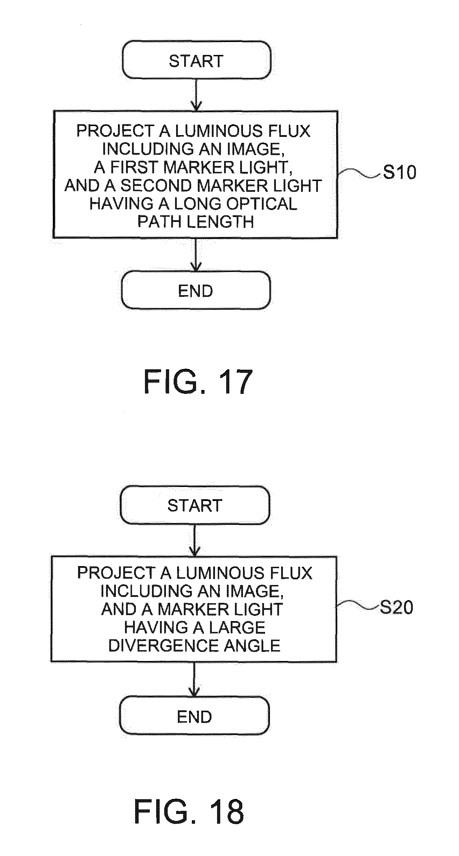

Fig.17 is a flow chart of a display method according to the third embodiment. As shown in Fig.17, as to the display method of the third embodiment, the luminous flux 112 including an image, the first marker light 311, and the second marker light 321 having an optical path length (to the viewer 100) shorter than that of the first marker light 311, are projected toward the viewer (S10) .

As projection of the luminous flux including the image, the image projection unit 115 already explained is used. Furthermore, as projection of the first marker light 311 and the second marker light 321, the first emitter 310 and the second emitter 320 already explained are used respectively.

In this display method, by projection positions of the first marker light 311 and the second marker light 321, a position of the projection area 114 of the luminous flux 112 can be estimated. As a result, a display of HUD type to easily estimate a position of the display viewable area is possible.

### (The fourth embodiment)

Fig.18 is a flow chart of a display method according to the fourth embodiment. As shown in Fig.18, as to the display method of the fourth embodiment, the luminous flux 112 including an image, the marker light 351 having a divergence angle wider than that of the luminous flux 112, are projected toward the viewer 100 (S20).

As projection of the luminous flux including the image, the image projection unit 115 already explained is used.

Furthermore, as projection of the marker light 351, the emitter 350 already explained is used. Furthermore, as the marker light, a marker light 361 explained in Figs.15 and 16 is used. In this case, the marker light 361 may be united with at least one part of elements included in the image projection unit 115.

Even if the viewer cannot recognize a position of the projection area 114 of the luminous flux 112, by using the marker light 351 (361) having a large divergence angle, the viewer can estimate a projection position of the luminous flux 112. As a result, a display of HUD type to easily estimate a position of the display viewable area is possible.

### (The fifth embodiment)

As to a vehicle according to the fifth embodiment, any of display apparatuses of the first and second embodiments is loaded. Briefly, for example, as shown in Fig.1, the vehicle 730 of the fifth embodiment includes the display apparatus 11 (of the first embodiment or second embodiment), and the front glass 710 to reflect the luminous flux 112 (emitted from the display apparatus 11) toward the viewer 100. The front glass 710 includes the reflector 711 set thereon.

In the vehicle according to the fifth embodiment, a vehicle having the display apparatus of HUD type to easily estimate a position of **a** display viewable area can be provided. As a result, the vehicle can be conveniently moved.

While certain embodiments have been described, these embodiments have been presented by way of examples only, and are not intended to limit the scope of the inventions. Indeed, the novel apparatuses and methods described herein may be embodied in a variety of other forms; furthermore, various omissions, substitutions and changes in the form of the apparatuses and methods described herein may be made without departing from the spirit of the inventions. The accompanying claims and their equivalents are intended to cover such forms or modifications as would fall within the scope and spirit of the inventions.

## Claims

1. A display apparatus comprising:
an image projection unit configured to project a luminous flux including an age toward a viewer;
a first emitter configured to emit a first marker light, the first emitter being set along an advance direction of the luminous flux; and
a second emitter configured to emit a second marker light, the second emitter being set at a side nearer to the viewer than the first emitter along the advance direction.

2. A display apparatus comprising:
an image projection unit configured to project a luminous flux including an image toward a viewer; and
an emitter configured to emit a marker light having a divergence angle wider than a divergence angle of the luminous flux, the emitter being set along an advance direction of the luminous flux.

3. The display apparatus according to claim 1 or 2,
wherein the emitter includes at least one of a light emitter to emit a light based on an electric energy, a reflector to reflect an incident light, and a wavelength converter to emit a light having a wavelength different from a wavelength of an incident electromagnetic wave.

4. The display apparatus according to claim 1 or 2,
wherein a shape of a projection area of the marker light is a recognizable shape of a center position of the projection area.

5. The display apparatus according to claim 1 or 2,
wherein an intensity of the marker light reaching inside a projection area of the luminous flux is lower than an intensity of the marker light reaching outside the projection area.

6. A display method comprising:
projecting a luminous flux including an image, a first marker light and a second marker light toward a viewer to view the image, an optical path length of the second marker light to the viewer being shorter than an optical path length of the first marker light to the viewer.

7. A display method comprising:
projecting a luminous flux including an image, and a marker light toward a viewer to view the image, a divergence angle of the marker light being wider than a divergence angle of the luminous flux.

8. A vehicle comprising:
the display apparatus according to claim 1 or 2; and
a front glass configured to reflect the luminous flux and the marker light emitted from the display apparatus, toward the viewer.
